(19)

Europäisches
Patentamt
European
Patent Office
Office européen
des brevets

(11) **EP 4 253 341 A1**

(12) **EUROPEAN PATENT APPLICATION**

(43) Date of publication:
**04.10.2023 Bulletin 2023/40**

(21) Application number: **22165587.1**

(22) Date of filing: **30.03.2022**

(51) International Patent Classification (IPC):
**C04B 11/00** *(2006.01)* **C04B 111/00** *(2006.01)*

(52) Cooperative Patent Classification (CPC):
(C-Sets available)
**C04B 11/005; C04B 2111/0062** (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **SAINT-GOBAIN PLACO
92400 Courbevoie (FR)**

(72) Inventors:
 • **MONTIGNY, Benoit
  75012 Paris (FR)**
 • **ADJOUA, Serge
  Mason, Ohio, 45040 (US)**
 • **FLETCHER, James
  Loughborought, LE12 6Ls (GB)**

(74) Representative: **Saint-Gobain Recherche
B.P. 135
39, quai Lucien Lefranc
93303 Aubervilliers Cedex (FR)**

(54) **METHOD AND SYSTEM FOR MEASURING PHASE COMPONENTS IN CALCIUM SULPHATE MATERIAL**

(57) A method for measuring the weights of phase components in a calcium sulphate material, e.g., gypsum or stucco, in particular for measuring the weights of DH, HH and AIII phases. The method comprises the following steps:
(a) weighing a given amount of calcium sulphate material at ambient temperature;
(b) placing the weighed calcium sulphate material in a moisture balance at ambient temperature;
(c) drying the calcium sulphate material at temperature between 40°C and 50°C, preferably between 40°C and 45°C;
(d) waiting until the weight is constant;
(e) weighing the dried calcium sulphate material;
(f) calculating the weight gain between step (a) and step (e), the weight gain being related to the amount of AIII phases in the calcium sulphate material.

EP 4 253 341 A1

(52) Cooperative Patent Classification (CPC): (Cont.)

C-Sets
**C04B 11/005, C04B 11/002**

**Description**

**Technical field**

The present disclosure pertains to methods for measuring the weights of phase components in a calcium sulphate material, e.g., gypsum or stucco,
[0002]    in particular for measuring the weights of DH, HH and AIII phases.

**Technical background**

Gypsum boards, in particular for wall and ceiling systems, are well-known applications of gypsum, calcium sulphate dihydrate $CaSO_4$ $2(H_2O)$. They are made of a gypsum core sandwiched between two cover sheets, e.g. paper sheets.
The base material from which the gypsum crystal matrix of the gypsum core is made is known as 'stucco,' and mainly comprises calcium sulphate hemihydrate $CaSO_4$ $0.5(H_2O)$. Calcium sulphate hemihydrate $CaSO_4$ $0.5(H_2O)$ is produced from calcination of gypsum material which mainly comprises calcium sulphate dihydrate $CaSO_4$ $2(H_2O)$. Calcination dehydrates calcium sulphate dihydrate to remove 1.5 molecules of water to form calcium sulphate hemihydrate $CaSO_4$ $0.5(H_2O)$.
Calcium sulphate hemihydrate occurs in two forms: alpha calcium sulphate hemihydrate (a-hemihydrate) produced from gypsum calcined in a steam-saturated atmosphere, and beta-calcium sulphate hemihydrate (β-hemihydrate) produced under conditions where the partial pressure of water vapour is low. Both alpha and beta calcium sulphate hemihydrates can be used to manufacture gypsum boards. Alpha calcium sulphate hemihydrate tends to provide harder gypsum board with greater strength and density.
Gypsum usually does not exclusively contain calcium sulphate dihydrate $CaSO_4$ $2(H_2O)$. Indeed, gypsum raw material used for manufacturing gypsum boards and gypsum cores of manufactured boards may contain several calcium sulphate phases in different amounts:

-    calcium sulphate dihydrate $CaSO_4$ $2(H_2O)$, referred as DH phase;
-    calcium sulphate hemihydrate $CaSO_4$ $0.5(H_2O)$, referred as HH phase;
-    unstable γ-anhydride $CaSO_4$ (hexagonal structure), referred as AIII phase; and
-    stable β-anhydride $CaSO_4$ (orthorhombic structure), referred as All phase.

All phase, i.e., stable β-anhydride $CaSO_4$, is an inert phase with a low water reactivity, i.e., it reacts very slowly, e.g., in several days, with water to form hydrate phases. In the context of industrial manufacturing of gypsum boards wherein the setting times of gypsum is less than few hours, All phase is usually disregarded.
A stable α-anhydride $CaSO_4$ (trigonal structure), referred as the AI phase, also occurs at elevated temperature. AI forms at temperatures above 1200°C by the phase transformation of All phase (stable β-anhydride $CaSO_4$). In current manufacturing methods of gypsum boards, the AI phase is often disregarded since temperatures above 1200°C are never reached.
The amounts at which the above calcium sulphate phases occur in gypsum raw material may depend on its origin. For instance, recycled gypsum material contains more HH phase than found in gypsum raw material, this is due to imperfect board drying which calcines some gypsum on the surface of boards. In addition, gypsum raw material may contain more All than recycled gypsum material, since geological processes may reach temperatures above 1200°C.
It is known that the grade of gypsum raw material used for manufacturing gypsum boards and the grade of gypsum core, i.e., stucco, in final boards affects both the parameters of the manufacturing process and the chemical and physical properties of the final boards. In particular, the performances of the manufacturing process and of the final boards may depend on the ratio of the separate phases, i.e., DH, HH and All phases, that the gypsum contains, and an inappropriate ratio of these separate phases may lead to waste products.
Therefore, an accurate analysis of the phases that may be contained in gypsum raw material or the stucco is mandatory to control the quality of the boards and to properly adjust the parameters of the manufacturing process, e.g., water-to-stucco ratio, grain sizes distribution, setting time, drying time...
A widespread practice for determining the ratio of these separate phases is to perform one or more of the following analyses on powder samples: thermo-gravimetric analysis (TGA), differential thermal analysis (DTA), differential scanning calorimetry (DSC), X-ray diffraction (XRD), and X-ray fluorescence (XRF). The amount of each phase may be determined by following the different thermal and/or weight loss events upon temperature scanning. These methods usually require time, e.g., from one to few days, to calibrate the apparatus, perform the temperature scanning and process and interpret the results.
CN 102175555 A [SHANGHAI RES INST BUILDING SCIENCES GROUP O LTD] 09.09.2011 describes a method comprising for determining the content of attached water and anhydrous gypsum, the content of hemihydrate gypsum and the content of dihydrate. The method comprises three steps that may be implemented independently to each other. The content of attached water and anhydrous water is measured by weight loss in a moisture analyser heated at 50°C on gypsum samples which are soaked in 95% ethanol solution. The content of hemihydrate is measured by weight loss in a moisture analyser heated at 200°C on gypsum samples which are previously soaked for 5 hours in distilled water. The content of dihydrate is measured by weight loss in a moisture analyser heated at 200°C on gypsum samples.

CN 110715877 A [SHANGHAI RES INST BUILDING SCIENCES GROUP O LTD] 21.01.2020 describes an apparatus and a method for determining a three steps method for determining the content of attached water and anhydrous gypsum (AIII, AII), the content of hemihydrate gypsum (HH) and the content of dihydrate (DH). The apparatus and the method provide a straightforward way to perform simultaneously the three independent steps of a method as described in CN 102175555 A [SHANGHAI RES INST BUILDING SCIENCES GROUP O LTD] 09.09.2011.

CN 102169073 A [BEIJING NEW BUILDING MATERIAL] 31.08.2011 describes a method for analysing AII phase in gypsum. The method relies on the dehydration at 50°C - 55°C of gypsum powder soaked in distilled water and sodium sulphate solution. The results are obtained in four days.

**Summary of the invention**

Technical problem

A first main drawback of current methods for determining the content of each calcium sulphate phase, e.g., DH, HH and AIII phases, within gypsum or stucco is that they are time consuming and may require several days to obtain results. Such delays are not compatible with production requirements on industrial manufacturing lines. For instance, manufacturing plants cannot rely on them for real-time or rapid control / adjustment of processes when the gypsum or stucco materials may change.

A second main drawback is that current methods may require sophisticated and complex lab equipment, devices, or apparatus to carry out the method, e.g., apparatus to carry out one or more of TGA, DTA, DSC, XRD or XRF. Access to such equipment close to the industrial manufacturing lines may often not be possible.

There is then a need for a quick and simple method for analysing the separate phases in gypsum or stucco. In particular, there is a need for a method which is compatible with the industrial context of manufacturing lines of gypsum boards and is able to provide reliable results in sufficient time to support the control or adjustment of manufacturing processes.

Solution to the technical problem

There is provided a method for measuring the weights of phase components in gypsum or stucco as described in claim 1, the dependant claims being advantageous embodiments.

Advantages of the invention

A first outstanding benefit of the method according to the invention is that it requires less time than current methods of the prior art. In particular, the measurement of the weights of all phase components, i.e., DH, HH, and AIII phases, may be performed in few hours, typically in less than 4 hours, instead of few days for current methods of prior art.

A second benefit, as it will be set forth in the detailed description of embodiments, is that the method may be segmented for determining part or all the phase components, i.e., DH, HH, AIII and AII phases, by combining certain embodiments. In other words, depending on the needs regarding the number of phase components to be measured, certain embodiments may be combined.

A third benefit is that the measurement may be performed on a small amount of calcium sulphate material, typically few grams, without prejudice for the accuracy.

A fourth benefit is that the method may be easily implemented in industrial environment as it does not require complex, sophisticated apparatus but a moisture balance.

**Detailed description of embodiments**

In a first embodiment, there is provided a method for measuring the weights of phase components in a calcium sulphate material, wherein said method comprises the following steps:

(a) weighing a given amount of calcium sulphate material at ambient temperature;

(b) placing the weighed calcium sulphate material in a moisture balance at ambient temperature;

(c) drying the calcium sulphate material at temperature between 40°C and 50°C, preferably between 40°C and 45°C;

(d) waiting until the weight is constant;

(e) weighing the dried calcium sulphate material;

(f) calculating the weight gain between step (a) and step (e), the weight gain being related to the amount of the AIII phases in the calcium sulphate material.

In the context of the disclosure, 'ambient temperature,' also named 'room temperature,' should be understood as it is conventionally defined in science and industry. It is typically about 20°C but may vary with humidity. A typical range is 15°C to 25°C.

In the context of the disclosure, a 'moisture balance' refers to any apparatus adapted for the determining the content of moisture based on weight difference. Preferably, the precision may be about 0.001g. An example of apparatus may be the Halogen Moisture Analyzer HX204 from Mettler Toledo®.

In step (f) of the method, the weight gain is related to the amount of the AIII phase in the calcium sulphate material. More precisely, the weight gain is the amount of water having reacted with AIII phases to form hydrated calcium sulphate phases. When this weight gain, G1, is expressed as relative weight gain percentage, the weight percentage of AIII phase may be calculated with the following formula:

$$AIII\ wt.\% = G1 \cdot \frac{M_{AII}}{(M_{HH} - M_{AII})}$$

Wherein $M_{AIII}$ is the mass molar of the AIII phase $CaSO_4$, i.e., 136 g/mol and $M_{HH}$ is the mass molar of the HH phase $CaSO_4\ 0.5(H_2O)$, i.e., 145 g/mol.

The amount of AIII phase provides valuable information on the reactive part of sulphate material with water. For instance, for gypsum raw material, the amount of AIII phases is related to the amount of water to use to hydrate the remaining non hydrated phases in said raw material before further processing in a manufacturing process.

Preferably, the calcium sulphate material weighed at step (a) is powdered calcium sulphate material. Powdered samples show more active surface and the time required for performing the method may be advantageously shortened.

Preferably, the weighing steps (a), (d) and (e) and the drying step (g) are performed in an atmosphere with constant humidity. It may typically be ambient air with a relative humidity RH about 50%.

With the method according to the first embodiment, the amount of AIII phase in a sample of calcium sulphate material of about 5g may be determined in about 15min, even less.

It may occur, in particular for powdered samples, that some water is adsorbed onto the surface of the material by physisorption and does not react with AIII phase through chemisorption. Some water may also be trapped in in the intra-granular open porosity and/or in inter-granular porosity. This non structurally bonded water is called "free moisture".

In the first embodiment, no distinction is made between part of weight gain which corresponds to the hydration of AIII phases and that which corresponds to free moisture.

Accordingly, in a second embodiment, the method may further comprise the following steps:

(g) drying the calcium sulphate material at temperature between 50°C and 70°C, preferably between 60°C and 65°C;

(h) waiting until the weight is constant;

(i) weighing the dried calcium sulphate material;

(j) calculating the weight loss between step (e) and step (i), the weight loss being the amount of free moisture in calcium sulphate material.

The weight loss is the amount of water which has not reacted with AIII phases and is unsettled in the material. It may be expressed in weight percentage.

When the value of the weight loss is not null or negligible, the amount of AIII phases may be corrected by subtracted it from the weight gain as determined in the first embodiment.

Preferably, the drying step (g) is performed in an atmosphere with constant humidity. It may typically be ambient air with a relative humidity RH about 50%.

The amount of DH and HH phases provides information on the useful reactive part of the calcium sulphate material for manufacturing boards, in particular stucco.

Accordingly, in a third embodiment, the method may further comprise the following steps:

(k) hydrating the dried calcium sulphate material by adding water, preferably distilled water, with a weight water to calcium sulphate material ratio which is comprised between 60% and 100%, preferably between 80% and 100%, at ambient temperature;

(l) waiting for at least 15 minutes and at most for 1 hour;

(m) drying said hydrated calcium sulphate material at a temperature between 60°C and 70°C, preferably between 65°C and 70°C;

(n) waiting until the weight is constant;

(p) weighing the dried calcium sulphate material;

(q) calculating the weight gain between step (i) and step (p), the weight gain being related to the amounts of HH phases in calcium sulphate material.

In step (q) of the second embodiment the weight gain is related to the amount of the HH phases in the calcium sulphate material. More precisely, the weight gain is the amount of water having reacted with the HH phases to form DH phases.

When this weight gain, G2, is expressed as relative weight gain percentage, the weight percentage of HH phases may be calculated with the following formula:

$$HH\,wt.\% = G2 \,.\, M_{HH}.\frac{2}{(3\,M_{H2O})}$$

Wherein $M_{HH}$ is the mass molar of the HH phase $CaSO_4\,0.5(H_2O)$, i.e., 145 g/mol, and $M_{H2O}$ is the mass molar of the water $H_2O$, i.e., 18 g/mol.

The amount of HH phase provide valuable information on the already reacted part of the sulphate material with water. For instance, for gypsum raw material, the amount of HH phases is related to the amount of water to use to fully hydrates said raw material before further processing in the manufacturing process.

The method according the third embodiment also allows to calculate the amount of DH phase which may come from the hydration of the HH phase by water with the following formula.

$$DH\,(HH)\,wt.\% = \frac{\left(HH\,wt.\%.\dfrac{M_{DH}}{M_{HH}}\right)}{\left(1 + \dfrac{3}{2}.\dfrac{HH\,wt.\%}{100}.\dfrac{M_{H2O}}{M_{HH}}\right)}$$

Wherein $M_{DH}$ is the mass molar of the DH phase $CaSO_4\,2(H_2O)$, i.e., 172 g/mol, $M_{HH}$ is the mass molar of the HH phase $CaSO_4\,0.5(H_2O)$, i.e., 145 g/mol, and $M_{H2O}$ is the mass molar of the water $H_2O$, i.e., 18 g/mol. $CaSO_4\,2(H_2O)$.

In a fourth embodiment, the method may further comprise the following steps:

(r) drying the calcium sulphate material at temperature between 130°C and 230°C, preferably between 160°C and 230°C;

(s) waiting until the weight is constant;

(t) weighing the dried calcium sulphate material;

(u) calculating the weight loss between step (p) and step (t), the weight loss being related to the amount of DH phase in calcium sulphate material.

In step (u) of the method, the weight loss is related to the amount of the DH phases in the calcium sulphate material. More precisely, the weight gain is the amount of water having been structurally removed from the hydrated calcium sulphate phases, i.e., HH and DH phases.

When this weight loss, L, is expressed as relative weight loss percentage, the weight percentage of DH phases may be calculated with the following formula:

$$DH\ wt.\% = L \cdot \frac{M_{DH}}{(M_{DH} - M_{AIII})}$$

Wherein $M_{DH}$ is the mass molar of the DH phase $CaSO_4\ 2(H_2O)$, i.e., 172 g/mol, and $M_{AIII}$ is the mass molar of the HH phase $CaSO_4$, i.e., 136 g/mol.

The amount of DH phases may provide valuable information on the total amount of DH phase which can be formed from hydration of the calcium sulphate material. For instance, for gypsum raw material, the amount of DH phases is related to its purity. It may also fix the minimum drying time for full dehydration of hydrated calcium sulphate phases before further processing.

The above calculated amount of DH phases may not come from only from the hydration of HH phases as DH phases may be already present in the calcium material before the method according to the invention is performed on it.

The amount of so-called residual DH phases, ΔDH, which corresponds to the amount of DH phases already present is the pristine calcium sulphate material may be calculated with the following formula:

$$\Delta DH\ wt.\% = DH\ wt.\% - DH\ (HH)\ wt.\%$$

Finally, the purity grade, PG, of the pristine calcium sulphate material may be calculated with the following formula:

$$PG\ wt.\% = 100.\left(\Delta DH\ wt.\% + HH\ wt.\%.\frac{M_{DH}}{M_{hH}}\right) / \left(HH\ wt.\%.\frac{M_{DH}}{M_{HH}} + (100 - HH\ wt.\%)\right)$$

The purity grade, PG, provide valuable information on the useful part of the calcium sulphate material which is reactive with water, and which may be used for the manufacturing of gypsum or stucco product. In particular, the purity grade allows to assess if a given calcium sulphate material may suit the manufacturing requirements for product to which a certain level of purity for gypsum or stucco is mandatory. It may also provide information on the reactivity of different gypsum raw materials during benchmarks.

All the steps of the method according to the invention may be conducted on small amount of calcium sulphate material.

In preferred embodiments, the given amount of calcium sulphate material weighed at step (a) is comprised between 1g and 20g, preferably between 1g and 10g, more preferably is 5g. It has been found that such amounts may reduce the required time to conduct the method according to any embodiments described above without prejudice for the accuracy of the results.

Another benefit of the invention is that it may help reduce the time required for determining the amounts of AIII, DH and HH phases. Thus, duration times of certain steps may be advantageously shortened, especially when the method is performed on a small amount of calcium sulphate material as set forth in certain embodiments.

In this context, in advantageous example embodiments, the duration time of the drying step (c) is at most 15 minutes.

In other advantageous example embodiments, the duration time of the drying step (g) is at most 15 minutes.

In examples of the third embodiment, the duration time of the drying step (m) is at most 2 hours.

In examples of the fourth embodiment, the duration time of the drying step (r) is at most 30 minutes.

As explained earlier, one of the benefits of the invention is that it may be easily implemented in industrial environment as it does not require complex, sophisticated apparatus but a moisture balance. Therefore, it may advantageously be used in a manufacturing process of gypsum boards.

All embodiments described in the present disclosure may be combined by one skilled in the art unless they appear to him technically incompatible.

## Examples

The weights of phase components of three different calcium sulphate materials were measured with a method according to the invention, Ex1 - Ex3, and a traditional method, CEx1 - CEx2. The calcium sulphate material used in Ex1 was the same type as that used in CEx1. The calcium sulphate material used in Ex2 was the same type as that used in CEx2. The calcium sulphate material used in Ex3 was the same type as that used in CEx3.

In examples Ex1 to Ex3, the weight of the AIII phases was measured according to the first embodiments, the amount of free moisture according to the second embodiment, the weight of HH phases according to the third embodiment, the weight of DH phases according to the fourth embodiment. Residual ΔDH phases and purity grades PG were calculated according to the formula provided herein. The results are reported in Tab. 1. Time durations to measure each of AIII, HH, DH phases and free moisture are reported in Tab. 2.

In comparative examples CEx1 to CEx3, the weights of III, HH, DH phases were measured as follows:

(a) weighing 3 - 4 g of powdered calcium sulphate material;

(b) moistening the weighed powder in a humid atmosphere above 60% RH for one hour;

(c) drying the moistened powder in oven at 40°C with silica gel for more than 16 hours until the weight is constant;

(d) calculating the weight gain between step (a) and step (c), the weight gain being related to the amount of the AIII;

(e) hydrating the dried gypsum by adding water in two times the weight of the powder;

(f) waiting for 1 hour;

(g) drying the hydrated powder in a ventilated oven at 40°C for more than 16 hours until the weight is constant;

(h) calculating the weight gain between step (c) and step (g), the weight gain being related to the amount of the HH phases;

(i) drying the powder at 225°C for 1 hour;

(j) cooling the sample at ambient temperature with desiccant until the weight is constant;

(k) calculating the weight gain between step (g) and step (j), the weight gain being related to the amount of the DH phases.

The results are reported in Tab. 1. Time durations to measure each of AIII, HH, DH phases and free moisture are reported in Tab. 2

[Tab. 1]

| Tab. 1 | Ex1 | CEx1 | Ex2 | CEx2 | Ex3 | CEx3 |
|---|---|---|---|---|---|---|
| **AIII** | 3.4 | 2.7 | 3.7 | 2.4 | 4.3 | 4.1 |
| **Free Moisture** | 0.0 | 0.0 | 0.0 | 0.0 | 0.0 | 0.0 |
| **HH** | 84.5 | 83.3 | 86.3 | 87.2 | 82.9 | 82.8 |
| **DH** | 96.4 | 95.4 | 96.8 | 97.2 | 3.8 | 4.43 |
| **PG** | 87.7 | 89.1 | 89.1 | 91.2 | 88.4 | 88.9 |
| **ΔDH** | 1.3 | | 1.1 | | | 0.6 |

[Tab. 2]

| Tab. 2 | Ex1 | CEx1 | Ex2 | CEx2 | Ex3 | CEx3 |
|---|---|---|---|---|---|---|
| AIII | 15 min | 16 hours | 15 min | 16 hours | 15 min | 16 hours |
| Free Moisture | 15 min | - | 15 min | - | 15 min | - |
| HH | 2 hours | 17 hours | 2 hours | 17 hours | 2 hours | 17 hours |
| DH | 30 min | 1 hour | 30 min | 1 hour | 30 min | 1 hour |

The results in Tab. 1 and Tab. 2 clearly demonstrate that the method according to the invention allows to measure the phase components a calcium sulphate materiel is less time than with a traditional method and with confident interval of less than 2%.

Although the invention has been described in connection with preferred embodiments and examples, it should be understood that various modifications, additions, and alterations may be made to the invention by one skilled in the art without departing from the spirit and scope of the invention as defined in claims.

**Claims**

1. A method for measuring the weights of phase components in a calcium sulphate material, wherein said method comprises the following steps:

   (a) weighing a given amount of calcium sulphate material at ambient temperature;
   (b) placing the weighed calcium sulphate material in a moisture balance at ambient temperature;
   (c) drying the calcium sulphate material at temperature between 40°C and 50°C, preferably between 40°C and 45°C;
   (d) waiting until the weight is constant;
   (e) weighing the dried calcium sulphate material;
   (f) calculating the weight gain between step (a) and step (e), the weight gain being related to the amount of AIII phases in the calcium sulphate material.

2. A method according to claim 1, wherein said method further comprises the following steps:

   (g) drying the calcium sulphate material at temperature between 50°C and 70°C, preferably between 60°C and 65°C;
   (h) waiting until the weight is constant;
   (i) weighing the dried calcium sulphate material;
   (j) calculating the weight loss between step (e) and step (i), the weight loss being the amount of free moisture in calcium sulphate material.

3. A method according to claim 2, wherein said method further comprises the following steps:

   (k) hydrating the dried gypsum by adding water, preferably distilled water, with a weight water to calcium sulphate material ratio which is comprised between 60% and 100%, preferably between 80% and 100%, at ambient temperature;
   (l) waiting for at least 15 minutes and at most for 1 hour;
   (m) drying said hydrated calcium sulphate material at a temperature between 60°C and 70°C, preferably between 65°C and 70°C;
   (n) waiting until the weight is constant;
   (p) weighing the dried calcium sulphate material;
   (q) calculating the weight gain between step (i) and step (p), the weight gain being related to the amounts of HH phases in calcium sulphate material.

4. A method according to claim 3, wherein said method further comprises the following steps:

   (r) drying the calcium sulphate material at temperature between 130°C and 230°C, preferably between 160°C and 230°C;

(s) waiting until the weight is constant;
(t) weighing the dried calcium sulphate material;
(u) calculating the weight loss between step (p) and step (t), the weight loss being related to the amount of DH phases in calcium sulphate material.

5. A method according to any of claims 1 to 4, wherein the duration time of the drying step (c) is at most 15 minutes.

6. A method according to claim 2, wherein the duration time of the drying step (g) is at most 15 minutes.

7. A method according to claim 3, wherein the duration time of the drying step (m) is at most 2 hours.

8. A method according to claim 4, wherein the duration time of the drying step (r) is at most 30 minutes.

9. A method according to any of claims 1 to 8, wherein the given amount of calcium sulphate material weighed at step (a) is comprised between 1g and 20g, preferably between 1g and 10g, more preferably is 5g.

10. Use of a method according to any of claims 1 to 9 in a manufacturing process of gypsum boards.

Europäisches
Patentamt

European
Patent Office

Office européen
des brevets

## EUROPEAN SEARCH REPORT

Application Number

EP 22 16 5587

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 105 758 761 A (MEICHAO GROUP CO LTD) 13 July 2016 (2016-07-13) * the whole document * ----- | 1-10 | INV. C04B11/00 C04B111/00 |
| | | | **TECHNICAL FIELDS SEARCHED (IPC)** |
| | | | C04B G01N |

The present search report has been drawn up for all claims

| Place of search | Date of completion of the search | Examiner |
|---|---|---|
| Munich | 9 September 2022 | Roesky, Rainer |

EPO FORM 1503 03.82 (P04C01)

## ANNEX TO THE EUROPEAN SEARCH REPORT
## ON EUROPEAN PATENT APPLICATION NO.

EP 22 16 5587

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2022

| Patent document cited in search report | | Publication date | Patent family member(s) | Publication date |
|---|---|---|---|---|
| CN 105758761 | A | 13-07-2016 | NONE | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102175555 A
- CN 110715877 A
- CN 102169073 A